# EUROPEAN PATENT SPECIFICATION

(11) **EP 1 765 117 B1**
(45) Date of publication and mention of the grant of the patent: **26.11.2008**
(21) Application number: 05738951.2
(22) Date of filing: 29.04.2005
(51) Int. Cl.: A47C 7/02

(54) **IMPROVED SEATING ELEMENTS AND SEAT BASE CONSTRUCTIONS**
VERBESSERTE SITZELEMENTE UND SITZBASISKONSTRUKTIONEN
ELEMENTS DE SIEGES AMELIORES ET CONSTRUCTIONS DE BASES DE SIEGES

(30) Priority: 11.06.2004 US 579134 P; 22.11.2004 GB 0425646
(43) Date of publication of application: 28.03.2007
(73) Proprietor: Nubax Limited, Weybridge Surrey KT13 8HE (GB)
(72) Inventor: JACKSON, Donna, K., Fort Worth, TX 76179 (US)
(74) Representative: Day, Caroline Margaret
(86) International application number: PCT/GB2005/001644
(87) International publication number: WO 2005/120293

(56) References cited:
- EP-A- 1 330 973
- WO-A-02/00063
- DE-A1- 3 810 980
- US-A- 5 522 106
- US-A1- 2002 124 318

## Description

The present invention relates to seating systems and in particular seat bases which are arranged to increase blood flow in a user and thus mitigate and/or prevent deep vein thrombosis (DVT), while providing comfortable and healthful seating.

### Background to the Invention

Deep Vein Thrombosis (DVT) is the formation of a blood clot in one of the deep veins of the body and usually in the leg. Pulmonary Embolus (PE) is the blockage of an artery in the lungs. DVT and PE can occur if the flow of blood slows down or stops. This in turn can occur if a person is subjected to prolonged immobility. In view of this, long distance travel, during which a person is seated for extended periods of time, has been identified as a factor which can contribute to DVT and PE.

In particular, venous outflow from the lower extremities is decreased by venous obstruction at the femoral vein level which is thought to be caused by the degree of kyphosis created by conventional seating. Kyphosis is the abnormal backward curve of the spine which occurs in a user's spine while seated. Conversely, by increasing the lordosis in the lumbar of the spine and pelvis it is thought that venous outflow from the lower extremities is increased. Lordosis is the abnormal forward curvature of the spine. However, the natural 'S' shape of the spine can be considered more lordotic than kyphotic and hence the term lordosis is used to describe a more natural spinal shape. There is therefore a need for seat designs which maintain a more lordotic posture in the subject.

Furthermore, pressure to the backs of the thighs and to the gluteus muscles while a user is seated also reduces venous flow from the lower extremities.

Current seating designs often exacerbate both of these problems. In particular, many seat designs, especially in the automobile industry, include a base cushion in which the rear of the seat base, which accepts the user's gluteus muscles, is lower than the front of the seat base which supports the knee joint. This forces the spine into kyphosis and increases pressure on the backs of the thighs and gluteus muscles which, as stated above, leads to reduced venous outflow from the lower extremities which in turn increases the risk of DVT and PE, among other things.

A review of the prior art reveals that there are many devices, systems and methods aimed at DVT mitigation. However, the art does not teach the skilled person how seat bases can be designed in order to reduce DVT. Furthermore, a search of various patent databases reveals no art relating to DVT mitigating seat design. It is also apparent from various online news sources that there is considered a need in the industry for seats which are properly designed for DVT mitigation.

There is therefore a need for seat designs which are arranged to increase blood flow in a user thereby mitigating or preventing DVT.

US Patent No. 6447058 (by the same inventor as the present application) discloses a seat system which is designed to prevent spinal shock and reduce lower back pain. This is achieved using a dual density vertical back support and V-shaped horizontal support member. However, there is no teaching in this document relating to DVT mitigation or increasing venous outflow. In particular, there is no teaching of what dimensions or shape the V-shaped support member should take in order to provide correct support and reduce pressure on the backs of the thighs, as suggested according to the teachings of the present invention.

There are known in the art seating designs which address the problems of posture. In particular, it is know to provide seats which increase lordosis in the spine by tilting the entire base cushion so that the an angle of greater than 90 degrees is formed between the vertical back support and the base cushion. Thus the rear of the base cushion is higher than the front. Such cushions support the user's gluteus muscles and the backs of the user's spine.

It has been noted by the applicant that there are problems with prior art of this kind. In particular they do not provide proper support of a user's skeletal structure and cause excess pressure to be exerted on the backs of the thighs. A subject's spinal column is supported by the pelvis. When a user sits the body will try to support itself with the skeletal structure rather than the user's muscles. The lowest part of the human upper skeletal structure is the bottom of the pelvis. The pelvis has two downward protrusions called the ischial tuberosity. It is noted by the applicant that the seats known in the art do not support the ischial tuberosity but instead support the generality of the user's gluteus muscles and the back of the user's upper thighs. Although the intention of such chairs is to support a users gluteus muscles and thighs in such a way as to reduce kyphosis in the spine, without proper support of the ischial tuberosity this is difficult to achieve, highlighting a plain set of deficiencies among the prior art, and underscoring the need for the teachings of the present invention.

Furthermore, because the ischial tuberosity is not supported properly, the user's upper body weight is supported by the gluteus muscles and back of thighs. This reduces venous outflow from the lower extremities as described above. Likewise, the dermal and sub dermal circulatory benefits of this design unexpectedly enhance use of the same both for diabetics (and other classes of treatment requiring patients) and members of the general populace.

### Summary of the Invention

The present invention provides a seat base apparatus according to claim 1.

The present invention also provides a seat base apparatus comprising a base cushion structure having a back and a front edge and a top surface provided by a first compressible layer of material, at least one support member disposed within the base cushion structure at the back of the structure below the top surface and more rigid than the first compressible layer and made of a material with an upper surface which is sized to support the ischial tuberosities and not extend further than is necessary to achieve support of the ischial tuberosities such that the gluteus muscles are not supported by the upper surface whereby, in use, the pelvis of a user is supported by the ischial tuberosity and is caused to tilt to an open position.

Preferably, the at least one support member is two support members; wherein each support member is arranged to support a respective ischial tuberosity.

Preferably, each support member is between 6 and 9cm wide and between 19 to 22cm long.

Preferably, each support member is 7.6cm wide and 20.3cm long.

Preferably, the support members touch at the rear of the base cushion structure and are between 6cm and 9cm apart towards the front of the base cushion structure.

Preferably, the support members are 7.6cm apart towards the front of the base cushion structure.

Preferably, the support member(s) is/are of a greater firmness than the surrounding base cushion structure.

Preferably, there is between 1lb test and 10lb 0.45 and 4.5 kg test difference in firmness between the support member(s) and the base cushion structure.

Preferably, there is a 5lb 2.27 kg test difference in firmness between the support member(s) and the base cushion structure.

Preferably, the base cushion structure is a single foam element into which the support member(s) is/are inserted.

Preferably, the base cushion structure is a two-element structure and the support member(s) is/are positioned between the two elements.

Preferably, the seat base apparatus is an airline seat, an automobile seat, or a child's seat.

Preferably, the or each support member is wedged shaped.

Preferably, each support member is between 2 and 3.8cm thick at the end towards the rear of the base cushion and tapers towards the opposing end.

Preferably, the surface of the base cushion structure substantially horizontal.

Preferably, the surface of the base cushion structure is at an angle of between 0 to 20 degrees from the horizontal.

Preferably, the support members are made of appropriate materials which may be foams, rubbers, plastics or silicones alone or in combination with other materials.

### Brief Description of the Drawings

So that the present invention may be more readily understood, embodiments thereof will now be described by way of example, with reference to the accompanying drawings, in which:
Figure 1a shows a stick representation of the human skeleton when standing;
Figure 1b shows a stick representation of the human skeleton when seated in a conventional seat;
Figure 1c shows a stick representation of the human skeleton when seated in a seat in accordance with the present invention;
Figure 2 is a plan view of a seat base cushion in an embodiment of the present invention;
Figure 3 shows a side view of a prior art seat base cushion when not in use.
Figure 4 shows a side view of a prior art seat base cushion when in use.
Figure 5 shows a side view of a seat base cushion in an embodiment of the present invention when not in use.
Figure 6 shows a side view of a seat base cushion in an embodiment of the present invention when in use.
Figure 7 shows a perspective view of an airline seat base cushion in accordance with an embodiment of the present invention;
Figure 8 shows another perspective view of an airline seat base cushion in accordance with an embodiment of the present invention;
Figure 9 shows a perspective view of an ischial tuberosity support apparatus in accordance with an embodiment of the present invention;
Figure 10 shows a wedge for use with the seating system in accordance with a automotive seat in an embodiment of the invention;
Figure 11 shows a back support in a preferred embodiment of the present invention;
Figure 12 shows a development view of a combined back support and ischial tuberosity support member in a preferred embodiment of the present invention;
Figure 13 shows a seat pan according to an alternative embodiment according to the teachings of the present invention;
Figure 14 shows a seat cushion according to an alternative embodiment according to the teachings of the present invention; and
Figure 15 shows a view through line 6/6 of Figure 11 according to an alternate embodiment of the present invention.

### Detailed Description of the Preferred Embodiments of the Invention

The present invention provides an improved seating element with an incorporated ischial tuberosity support apparatus together with a system for incorporating that apparatus into existing seat designs and a system for incorporating the apparatus into new seat designs. Specific examples of such systems are provided below, however the features of the ischial tuberosity support apparatus are first described in conjunction with the features and principles common to the incorporation of the ischial tuberosity support apparatus in both existing and new seat designs.

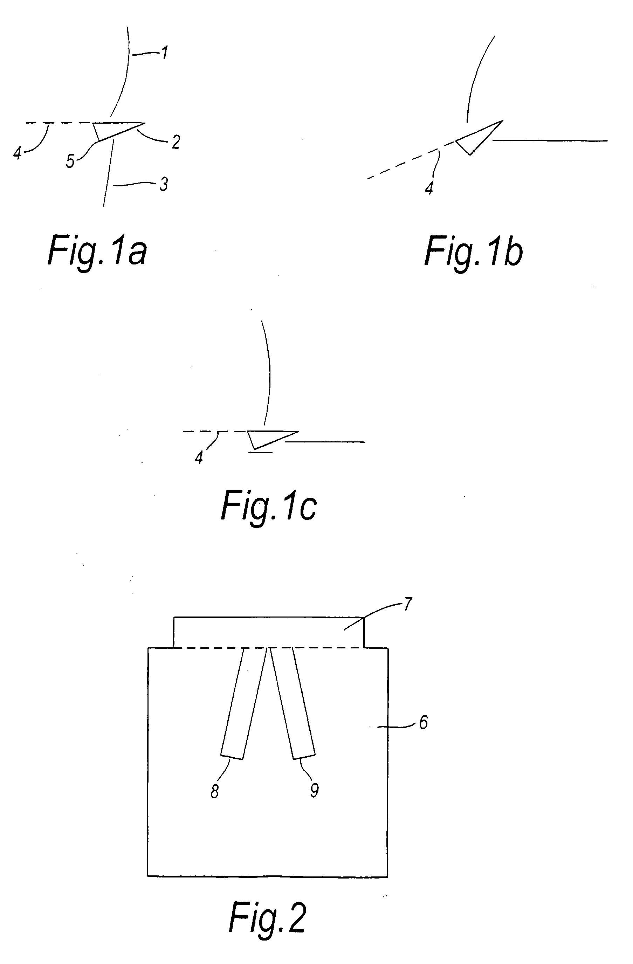

As noted above, inducing a greater degree of lordosis in the spine increases venous outflow. In turn, the degree of lordosis in the spine is related to the relative orientation of the pelvis. This is demonstrated in Figure 1. Figure 1a shows a stick representation of the spine 1, pelvis 2 and thighs 3 of the human body while standing. It can be seen the spine takes a lordotic shape and the pelvis assumes a notional horizontal orientation shown by line 4, as understood by those skilled in the art.

Figure 1b shows a stick representation of the human body while seated in a conventional seat. Here, the pelvis can be seen to tilt backwards away from the notional horizontal which causes the spine to loose its lordotic shape. This is represented by line 4 which is shown tilted away from the horizontal. Figure 1b also shows a representation 5 of the ischial tuberosity set of a typical user at the lower rear of the pelvis. The ischial tuberosity set are positioned rearward of the point at which the femur joins the pelvis. Thus if the ischial tuberosities are supported, and the thighs are allowed to sink into a seat cushion in the normal way, the pelvis will be caused to tilt forward and a lordotic shape restored to the spine as shown in Figure 1c. In this manner, the thighs, pelvis and spine move to an open position.

In accordance with this first principle, the present invention provides an ischial tuberosity support apparatus which comprises a support member which is located within a seat base cushion and is arranged to support the ischial tuberosity set of a user so as to induce a forward tilt in the pelvis. In order to achieve this, viewing a typical seat base cushion in plan view, the support member should have a length and a width large enough to support the ischial tuberosities. In addition, the support member should be narrow enough such that it does not provide support to the muscular tissue surrounding the pelvis, in particular the gluteus muscles and hamstrings. In this manner, the muscular tissue is supported by the seat base cushion surrounding the support member and not by the support member itself. While the support member may take any size or shape which achieves these objects, a preferred embodiment will now be described with reference to Figures 2.

Figure 2 shows a plan view of a generic seat base cushion 6, to which a back support 7 is attached. In this embodiment, the support member is two support members 8, 9 which are positioned toward the rear of the seat base cushion and in this example they touch at the back. Support members are of similar if not identical shape and size, and are disposed side by side with the adjacent facing sides diverging towards the front of the seat. In this drawing, each support member is 7cm to 8cm wide (about 3 inches) and 20cm to 21cm long (about 8 inches). The ends of the arms nearest the front of the base cushion are 7cm to 8cm apart (about 3 inches). The support members can therefore be seen to assume a chevron-like shape. In this embodiment, the position of a user on the seat base cushion when seated is determined largely by the interaction between the user's back and the back support. For any given user, if their back is aligned with the back support, their ischial tuberosity will take up a certain position on the base cushion. The support members 8, 9 are positioned such that, in use, a user's ischial tuberosity are located above them. The larger the user, the larger the gluteus muscles and hence the further forward on the seat base cushion their ischial tuberosity set will be positioned. In addition, the larger the user the further apart the ischial tuberosity protrusions will be. To accommodate this, the support members are further apart toward the front of the base cushion than they are towards the rear of the base cushion.

The actual dimensions of the support members are based on the average distance between the ischial tuberosity set of a group of users selected from a cross-section of the population. In this regard, it will be appreciated that the above measurements are one example of an ischial tuberosity support apparatus in accordance with the present invention and that a range of shapes and sizes may achieve the same effect.

Figure 2 demonstrates an arrangement for the ischial tuberosity support apparatus which is large enough to provide support to the ischial tuberosity set of a group of users, while being narrow enough to properly support the ischial tuberosity set, avoiding support of the surrounding muscular tissue. This arrangement has the added advantage of reducing pressure to the gluteus muscles and hamstrings of a user while seated. When seated, the weight of the user's upper body is normally largely taken by the hamstrings and the gluteus muscles. Much of the weight is transferred through the user's spine and pelvis. Supporting the ischial tuberosities also has the effect of reducing the weight taken by the hamstrings and gluteus muscles.

Although it has not been explicitly described above, it will be appreciated that a seat base cushion will be supported by a supporting base. This base may take the form of a solid base or pan onto/into which the seat base cushion is placed, or it may provide cushioning itself in the form of springs or the like. Typically the supporting base will be separate to the seat base cushion.

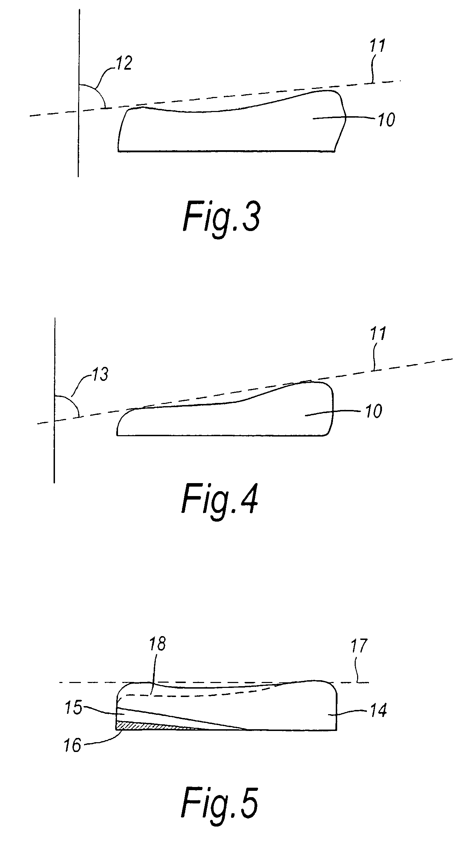

The above description, outlines the requirements of the ischial tuberosity support apparatus from a plan view of a seat base cushion. Figures 3 to 6 show cross-sectional views through a seat base cushion. Figures 3 and 4 show a cross section of a generic prior art seat base cushion 10 which are useful for comparison purposes when describing the advantages to be obtained by the present invention. Figure 3 shows such a seat when not in use. The line 11 represents the overall tilt of the seat base cushion surface and in this example forms an angle 12 with the vertical. Figure 4 shows the seat base cushion when in use and the solid outline of the seat shows the degree of compression which the seat base cushion 10 undergoes when bearing the weight of a user. The angle 13 which line 11 forms with the vertical is less than angle 12 shown in Figure 3. Angle 12 may be 79° and in that case, angle 13 is less than 79°. As the ischial tuberosities are not supported, the prior art seat base cushion creates substantial backward tilt in the pelvis which results in substantial slump in the spine and the gluteus muscles and hamstrings take the majority of the weight of the user's upper body, causing ischemia and restricted venous outflow.

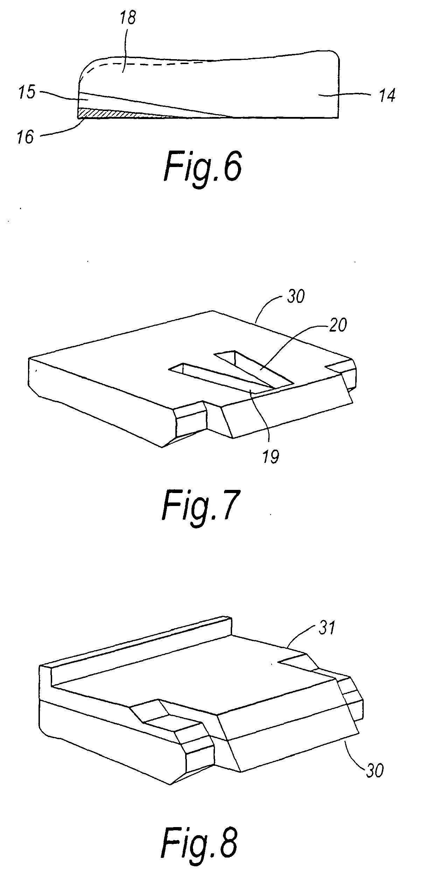

Figures 5 and 6 show cross-sectional views of a seat base cushion 14 and a support member 15 in an illustrative by in no way limiting schematized and exemplary embodiment of the present invention. The support member 15 is positioned within the seat base cushion and the entire cushion is tilted or raised at the back by tilt means 16. Figure 5 shows the seat base cushion when not in use. Line 17 which represents the overall tilt of the surface of the cushion is substantially horizontal. Dotted line 18 represents the prior art seat base cushion shown in Figure 3. The surface of the support member 14 slopes downwards toward the front of the seat base cushion, with respect to the horizontal, and in this example this is achieved using a wedge shaped support member.

Figure 6 shows the seat base cushion in accordance with the present invention when in use. Figure 6 shows that the seat base cushion surface does not drop below the level of the prior art seat base cushion shown in Figure 3.

By providing better support within the seat base cushion the user's pelvis is not allowed to slump into the seat which helps prevent slump in the spine. However, an important improvement and established advantage associated with this embodiment is realised by the support member 15. Support member 15 may have a variable durometer relative to the rest of the seat, depending upon the specific application in play. The support member supports the ischial tuberosities while the muscular tissue surrounding the pelvis is allowed to sink into the seat base cushion. The sloping surface of the support member induces a forward tilt in the pelvis. In addition, pressure is taken off the gluteus muscles and hamstrings which leads to increased venous outflow. As shown above in Figure 1c, one of the advantages of the present invention is that is tilts the pelvis forward. Preferably, the present invention tilts the pelvis so that it resumes the notional horizontal angle shown in Figure 1a. Preferably, the pelvis is tilted forward so that it tilts forward of the notional horizontal by at least about 1 to 1.5°, for most users and seats.

Seating systems incorporating an ischial tuberosity support apparatus of this sort described above will now be described, in schematic, exemplary fashion.

A first example is an airline seat base system. A typical airline seat comprises a two-part foam cushion. Figure 7 shows the bottom part 30 of a two-piece airline base cushion system. Figure 8 shows the top part 31 of the two-piece cushion system in position on the bottom part of the two-piece cushion system. The bottom foam 30 is typically floatation foam which is open celled and very firm. Foam of this type will typically have a density rating of between 25 lb test and 75 lb test 11.34 and 34 kg. In Figure 7 the bottom foam has a density rating of at least about 30 lb test 13.6 kg and preferably 30 lb test. The top foam 31 is typically closed cell and its density depends upon the type of plane/application. Foam of this type will typically have a density rating of between 30 lb test and 65 1b test 13.6 and 29.5 kg. In Figure 8 the top foam has a density rating of 50 lb test 22.7 kg. The two-piece cushion is then covered in fire proof upholstery.

Referring to Figure 7, a pair of recesses 19, 20 are provided in the base cushion to accept the ischial tuberosity support apparatus. In this example the support members are formed by filing the recesses with a foam of a higher density than that of the base cushion and top cushion. Variable durometers between the material of recesses 19 and 20 and bottom part 30 likewise can be achieved with silicones and other known materials based upon the specific airline seat being modelled, replaced, retrofitted or designed.

In order that the support members impart the necessary tilt on the pelvis the surface of the support members must be tilted with respect to the horizontal, such that the front of the support members are lower than the back of the support members. In this embodiment, the surface of the support members is in the same plane as the surface of the bottom cushion of the two-piece cushion. Thus the entire seat is tilted forward such that the plane of contact between bottom and top cushions is lower at the front of the seat base than at the back. Optionally the top cushion may be arranged so that when the plane of contact with the bottom cushion is tilted, the top surface of the top cushion is substantially horizontal or it may be tilted in the same way as the surface of the support members.

The dimensions of a typical airline seat system as schematically offered for consideration herein will now be described. In plan view the airline two-piece base cushion is between 45cm to 46cm wide (about 18 inches) and between 46cm to 47cm long (about 18.4 inches). The bottom cushion is between 6cm to 8cm deep (about 3 inches). The support members are between 4cm to 6cm wide (about 2 inches). At the back of the base cushion the support members touch and at the front they are separated by between 7cm to 8cm (about 3 inches).

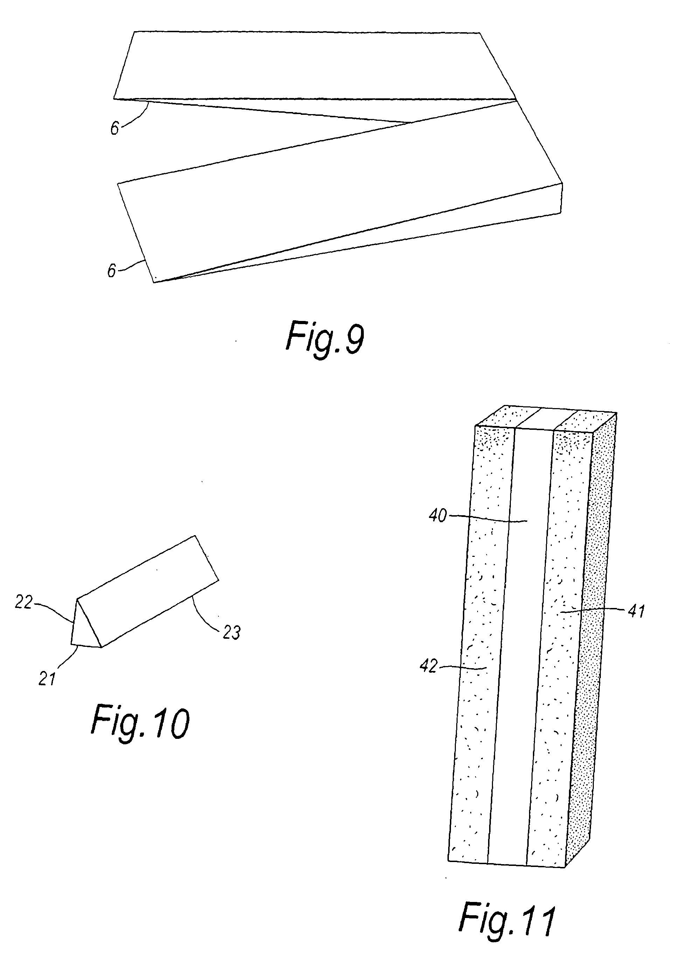

Figure 9 shows a perspective view of an ischial tuberosity support apparatus for use in an automotive seat base cushion among other things. It will be noted that these wedge shaped support members are similar to those described above in relation to the generic seat base cushion. The dimensions of the support members may be as follows. Length between 20cm to 24cm (about 8 to 9 inches), width between 7cm and 8cm (about 3 inches) and depth at the rear end between 1.5cm and 3cm (about 0.75 to 1 inches).

In an alternative embodiment of the present invention, an ischial tuberosity support apparatus for use in very thin seat base cushions in automotive seat base systems and in particular seat base cushions which are around 3cm to 4.5cm thick (about 1.5 inches) at the point where the base cushion meets the back cushion. Support members are provided as described above in relation to first automotive seat system or the generic seat base cushion, however, in addition to this a wedge 23 is inserted towards the back of the base cushion as shown in Figure 10. Figure 10 shows a perspective view of the wedge 23 for use with the present invention. The wedge is designed to be inserted into the seat system where the seat base joins the seat back. The wedge is as long as the seat in question is wide and in this example is 33cm (13 inches) long, edge 21 measures between 1.5cm and 2.5cm (about 0.75 inches) and edge 22 measures about 2.5cm (about 1 inch). The wedge assists in tilting the pelvis forward to rest the ischial tuberosities on the support members of the ischial tuberosity support apparatus. This feature has enabled the same degree of pelvic tilt to be achieved as with deeper seat cushions.

In the above examples the ischial tuberosity support members are typically firmer than the surrounding base cushion. For example, if the base cushion is made of foam which is 50lb test 22.7 kg, then the support members may be made of 51lb test to 60lb test foam 23.1 to 27.2 kg, depending on the type of seat pan, base cushion thickness, whether or not the base cushion has wings attached and the surface angle of the base cushion. The difference in firmness between the support members and the surrounding foam could be anywhere between 11b test and 201b test, depending on the type and firmness of cushion surrounding the supporting members, for these examples. If the ischial tuberosity support members are to be inserted into an existing seat system, once the type of base cushion foam has been identified and its firmness/absorption ascertained, the properties of the support members can be decided. Generally, he support members would be between 1lb test and 10lb test 0.45 and 4.5 kg firmer than the surrounding base cushion. However, in situations where the base cushion is extremely thin, the difference in firmness could be less than 1lb test 0.45 kg

Optionally, the seat base cushion is arranged such that its surface is either substantially horizontal or such that the front of the base cushion surface drops below the level of the rear of the base cushion surface forming an angle between 0 and 20 degrees from the horizontal. Using a substantially flat or forward tilting cushion in combination with the above-described support members further enhances the stated benefits of the present invention. In particular, if an angle of greater than 90 degrees is maintained between the subject's thighs and spine, lordosis is easier to achieve. Furthermore, pressure to the backs of the thighs is reduced when compared with a seat cushion which includes a lowered area which receives the user's gluteus muscles.

The embodiments above give specific depth information, but in general terms, for a typical seat, the top surface of the support members will be no less than 1/16^{th} of the depth of the base cushion below the top surface of the cushion and the bottom of the support members will be no more than 1/16^{th} of the depth of the base cushion above the bottom of the cushion.

In some embodiments, the support members are placed directly on the seat pan. Thus the bottom of the support members is at the same level as the bottom of the seat cushion. This arrangement is particularly useful in the automotive seat described above, where the seat cushion is very thin.

Although the above embodiments have been described in the context of a pair of support members, it will be appreciated that the present invention could comprises a single support member with a single support surface while achieving the same effects as described above. Alternatively, when viewed from the back, the support member could be a 'U' shaped support member which provides a pair of support surfaces.

In some of the seat base systems described above, the surface of the seat cushion itself has been described as effective for producing certain advantageous effects. In particular, the seat base cushion surface has been described as being either horizontal or sloping in the same direction as the support member surfaces (i.e. downwards, back-to-front). It should be noted that, in some seat base systems, in particular automotive seat base systems, the seat base cushion surface may slope upwards, back-to-front, i.e. in the opposite direction to the surface of the support members.

Some of the seat base systems described above relate to foam seat cushions and foam support members. One of the main properties of these systems is that the seat cushion is made of foam which is less firm than the foam of the support members. In this manner, the support member is more rigid than the seat cushion, therefore meaning that when used, the seat cushion allows the user to sink into the seat to a greater degree than the support members. This property of the support members being more rigid than the seat cushion covers embodiments other than foam support members. For example, the support members may be solid and supported on a resilient mounting, such that they are more rigid than the seat cushion. The skilled person will appreciate that the important factor is that the support members are more rigid than the seat cushion. In a further embodiment of the invention, the ischial tuberosity support apparatus may be used in conjunction with a back support. In particular, the back support may be designed with a soft channel running vertically to receive the spine to help relieve pressure on the spine. The channel allows the spine to 'float' while the muscle structure running parallel to the spine contacts the back support. This soft channel helps prevent mechanical loading, insult to the back, spinal shock and reduces lower back insult, pain and debilitation.

Figure 11 shows a back support in one aspect of the present invention. A soft channel 40 runs between side sections 41,42 of firmer material. An important characteristic of the central channel 40 is that it is relatively softer than the surrounding back cushion. The various sections of the back support may be made of foam, gels, silicone or any suitable material providing the necessary firmness and support. When combined with a seat back cushion the side sections may be the seat back cushion itself. The soft channel is then formed in a groove or recess in the seat back cushion.

It has been found that a combination of the seat base construction in accordance with the present invention and a back support is particularly advantageous in terms of, DVT mitigation, proper posture (increasing lordosis in the spine) and spinal protection. A back support will now be described in more detail.

The back support comprises a substantially vertical seating supplement component. The actual angle of the seating supplement will vary depending on the seat type. The seating supplement component has a means for bracingly supporting a predetermined aspect of a user's spine. The component has a dual firmness construction having an external portion which is of a relatively higher firmness than an inner portion whereby the spine is aligned in a predetermined spatial relationship with the dual firmness construction when a user is positioned thereon.

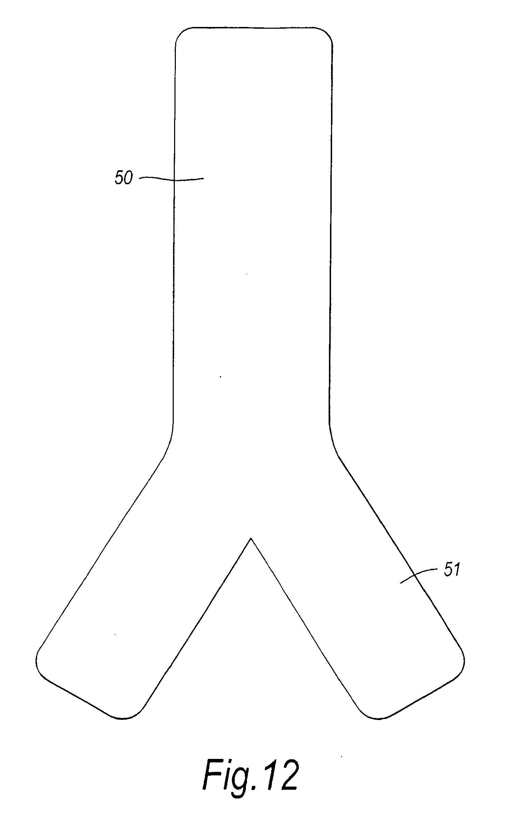

The back support and ischial tuberosity support member may be separate components that are positioned relative to one another when the seat is constructed, Depending on the application, the position of the seat back and seat base relative to one another may adjusted by the user. Alternatively, they may be formed as a single piece. For example, Figure 12 shows an example of a combined ischial tuberosity support member and back support for use in an automotive seat. The top piece 50, fits into the upright back cushion and is designed to be of a lower firmness than the surrounding back cushion material. In this manner the back support works as described above. The bottom chevron shaped piece 51, fits into the bottom cushion and is designed to be of a greater firmness than the surrounding cushion. In this manner the ischial tuberosity support member works as described above.

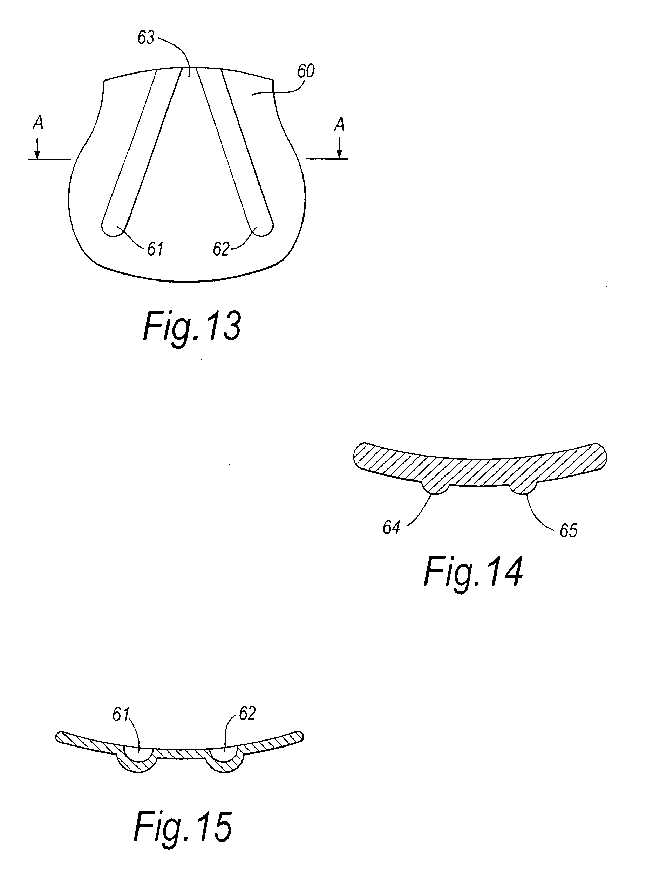

Figures 13, 14 and 15 illustrate another typical improved seating element according to the instant disclosure. Recesses 61 and 62 form a chevron pattern at apex 63. It may also be the case that recesses 61 and 62 join together at or before apex 63. Figure 15 shows yet another way to create a variable durometer improved seating element, insert or entire seat. Known materials may be employed at locations 61 and 62 of the seating element defining a chevron, to use relative densities and variable durometer to achieve the teachings of the present invention.

In the embodiment shown in Figures 13, 14 and 15, the seat includes a ridged seat pan and a seat cushion which is placed on top of the seat pan. Figure 13 shows a plan view of a seat pan 60 which is arranged to receive the seat cushion. The seat pan has a top surface with two grooves 61,62 formed therein which run from the back of the seat pan towards the front. The grooves nearly touch at the back 43 of the seat pan and spread outwards towards the front of the seat pan. The grooves therefore form a chevron shape as described above in relation to other embodiments.

Figure 15 shows a cross-section through plane A-A of Figure 13. Here the cross-section of the grooves can be seen and each groove is approximately semicircular in shape. The top surface of the seat pan is also slightly concave.

Figure 14 shows a cross-section through the seat cushion arranged to be positioned on the sea pan. The seat cushion has two protrusions 64,65 which correspond to the grooves 61,62. When the seat cushion is positioned on the seat pan the protrusions sit in the grooves and thus form chevron shaped support areas.

The position of the chevrons shaped support areas is designed such that in use, the user's ischial tuberosities are positioned above the groove/protrusion arrangement. The larger the user, the further apart are the ischial tuberosities and the further forward the user sits on the seat. Thus, as the chevrons are further apart towards the front than at the back. It has been found that the parts of the cushion above the groove/protrusion arrangement provide better support than the rest of the cushion. Thus, the user is provided with better support on their ischial tuberosities, causing the pelvis to be tilted forward and lordosis induced in the back and pressure to be taken off the back's of the gluteus muscles. As described above, this increases blood flow and reduces the chance of DVT.

The seat base described in relation to Figures 13 to 15 may be a child's seat. The simple construction allows easy attachment to an appropriate frame. The seat pan may be made from hard plastics and the cushion from foam. The materials and design may be modified as required.

It will be apparent from the above that support of the ischial tuberosities can be achieved either by providing support members within the seat base or by changing the interaction between the top cushion and other elements so as to provide an area of greater firmness within the seat cushion. In both cases, the durometer of the seat cushion changes across the surface of the seat.

### Experiment

Nine volunteers underwent maximum venous outflow (MVO) testing while seated in a conventional seat, and while seated on a seat in accordance with the present invention. The results were an average MVO of 5.46 cm/sec with patients seated on a conventional seat and an average MVO of 7.98 cm/sec with patients seated on a seat in accordance with the present invention. An average increase in MVO of 90% was noted. In conclusion, this preliminary investigation reveals an improved MVO in the lower extremities in the seated position with a seat in accordance with the present invention when compared to conventional seating. The improved venous outflow decreases DVT and PE in users.

## Claims

1. A seat base apparatus (10, 14, 60) having a top surface, the top surface having a first area of a first firmness and a second area of second firmness, firmer than said first firmness, whereby said second area of the top surface has a chevron-like shape with dimensions which are narrow enough to support the ischial tuberosity of a user while avoiding support of the surrounding muscular tissue and said first area of the top surface is defined to support the surrounding muscular tissue, such that in use, the pelvis of a user is caused to tilt to an open position.

2. The seat base apparatus (10, 14, 60) of claim 1 comprising a base cushion structure having a back and a front edge and said top surface, the top surface provided by a first compressible layer of material, at least one support member (8, 9, 15) disposed within the base cushion structure at the back of the structure below the top surface and more rigid than the first compressible layer and made of a material with an upper surface which slopes downwards, back to front, whereby to provide said second area of second firmness.

3. The seat base apparatus (10, 14, 60) of claim 1 comprising a base cushion structure (14) having a back and a front edge and said top surface, the top surface provided by a first compressible layer of material, at least one support member (8, 9, 15) disposed within the base cushion structure (14) at the back of the structure below the top surface and more rigid than the first compressible layer and made of a material with an upper surface which is sized to support the ischial tuberosities and not extend further than is necessary to achieve support of the ischial tuberosities such that the gluteus muscles are not supported by the upper surface whereby to provide said second area of second firmness.

4. The apparatus of claims 2 or 3 in which the at least one support member is two support members (8, 9, 15); wherein
each support member (8, 9, 15) is arranged to support a respective ischial tuberosity.

5. The apparatus of claim 4 in which each support member is between 6 and 9cm wide and between 19 to 22cm long.

6. The apparatus (10, 14, 60) of claim 5 wherein each support members is 7.6cm wide and 20.3cm long.

7. The apparatus (10, 14, 60) of any of claims 4 to 6 wherein the support members (8, 9, 15) touch at the rear of the base cushion structure (14) and are between 6cm and 9cm apart towards the front of the base cushion structure.

8. The apparatus (10, 14, 60) of claim 7 wherein the support members are (8, 9, 15) 7.6cm apart towards the front of the base cushion structure (14).

9. The apparatus (10, 14, 60) of any preceding claim in which the support member(s) (8, 9, 15) is/are of a greater firmness than the surrounding base cushion structure (14).

10. The apparatus (10, 14, 60) of claim 9 in which there is between 11b test and 101b 0.45 & 4.5kg test difference in firmness between the support member(s) (8, 9, 15) the base cushion structure (14).

11. The apparatus (10, 14, 60) of claim 10 in which there is a 51b 2.27 kg test difference in firmness between the support member(s) (8, 9, 15) the base cushion structure (14).

12. The apparatus (10, 14, 60) of any preceding claim in which the base cushion structure (14) is a single foam element into which the support member(s) (8, 9, 15) is/are inserted.

13. The apparatus (10, 14, 60) of any of claims 2 to 11 in which the base cushion structure (14) is a two-element structure and the support member(s) (8, 9, 15) is/are positioned between the two elements.

14. The apparatus (10, 14, 60) of claim 13 in which the seat base apparatus (14) is an airline seat.

15. The apparatus (10, 14, 60) of any preceding claim wherein the or each support member (8, 9, 15) is wedged shaped.

16. The apparatus (10, 14, 60) of claim 15 wherein each support member (8, 9, 15) is between 2 and 3.8cm thick at the end towards the rear of the base cushion (14) and tapers towards the opposing end.

17. The apparatus (10, 14, 60) of any preceding claim wherein the surface of the base cushion structure (14) substantially horizontal.

18. The apparatus (10, 14, 60) of any of claims 2 to 16 wherein the surface of the base cushion (14) structure is at an angle of between 0 to 20 degrees from the horizontal.

19. The apparatus (10, 14, 60) of any preceding claim wherein the support members (8, 9;15) are made of silicone.

20. The seat base apparatus (10, 14, 60) of claim 1 further comprising a seat pan (60) and a seat cushion, wherein the seat pan includes a recess (61, 62) corresponding to said second area and the seat cushion includes a protrusion (64, 65) arranged to fit into said recess (61, 62), whereby in use, said recess (61, 62) and said protrusion (64, 65) interact so as to form said second area of second firmness.

21. The seat base apparatus (10, 14, 60) of claim 1 in which the second area comprises a plurality of variable durometer extensions defining a chevron-shaped pattern extending from a first edge whereby a user's ischial tuberosities are aligned along a zone disposed over or proximate to the plane of a seat providing the first area and in which the second area is disposed.

22. The seat base apparatus of claim 21, wherein the variable durometer extensions are made up of more than one type of material.

## Patentansprüche

1. Sitzbasisvorrichtung (10, 14, 60) mit einer oberen Oberfläche, die einen ersten Bereich mit einer ersten Festigkeit und einen zweiten Bereich mit einer zweiten Festigkeit aufweist, die größer als die erste Festigkeit ist, wobei der zweite Bereich der Oberfläche chevronartige Gestalt mit Abmessungen hat, die eng genug sind, um die Ischias-Protuberanzen eines Nutzers zu unterstützen, jedoch die Unterstützung umgebenden Muskelgewebes zu vermeiden, und wobei der erste Bereich der Oberfläche dazu bestimmt ist, das umgebende Muskelgewebe zu unterstützen, so dass im Gebrauch das Becken eines Nutzers dazu veranlasst wird, in eine offene Position zu schwenken.

2. Sitzbasisvorrichtung (10, 14, 60) nach Anspruch 1, umfassend eine Basis-Kissenstruktur mit einem Rücken, einer Vorderkante und der oberen Oberfläche, wobei die Oberfläche mit einer ersten kompressiblen Materialsschicht versehen ist, mindestens ein Stützteil (8, 9, 15), das innerhalb der Basis-Kissenstruktur auf der Rückseite der Struktur unterhalb der Oberfläche angeordnet ist, größere Steifigkeit als die erste kompressible Materialschicht hat und aus einem Material mit einer von hinten nach vorn abwärts geneigten Oberfläche besteht, um so den zweiten Bereich mit der zweiten Festigkeit zu bilden.

3. Sitzbasisvorrichtung (10, 14, 60) nach Anspruch 1, umfassend eine Basis-Kissenstruktur (14) mit einem Rücken, einer Vorderkante und der oberen Oberfläche, wobei diese Oberfläche von einer ersten kompressiblen Materialschicht gebildet ist, mindestens ein Stützteil (8, 9, 15), das innerhalb der Basis-Kissenstruktur (14) auf der Rückseite der Struktur unterhalb der Oberfläche angeordnet ist, größere Steifigkeit als die erste kompressible Schicht hat und aus einem Material mit einer Oberfläche besteht, welche dazu bemessen ist, die Ischias-Protuberanzen zu unterstützen,und sich nicht weiter erstreckt als nötig ist, die Ischias-Protuberanzen so zu unterstützen, dass die Gluteus-Muskeln nicht von der Oberfläche unterstützt werden, um so den zweiten Bereich mit der zweiten Festigkeit zu bilden.

4. Vorrichtung nach Anspruch 2 oder 3, bei dem das mindestens eine Stützteil zwei Stützteile (8, 9, 15) umfasst, die so angeordnet sind, dass jedes Stützteil eine entsprechende Ischias-Protuberanz unterstützen kann.

5. Vorrichtung nach Anspruch 4, bei der jedes Stützteil zwischen 6 und 9 cm breit und zwischen 19 bis 22 cm lang ist.

6. Vorrichtung (10, 14, 60) nach Anspruch 5, bei der jedes Stützteil 7,6 cm breit und 20,3 cm lang ist.

7. Vorrichtung (10, 14, 60) nach einem der Ansprüche 4 bis 6, bei der die Stützteile (8, 9, 15) bis zur Hinterseite der Basis-Kissenstruktur (14) reichen und einen Abstand zwischen 6 und 9 cm von der Vorderseite der Basis-Kissenstruktur haben.

8. Vorrichtung (10, 14, 60) nach Anspruch 7, bei der die Stützteile (8, 9, 15) einen Abstand von 7,6 cm von der Frontseite der Basis-Kissenstruktur (14) haben.

9. Vorrichtung (10, 14, 60) nach einem der vorangehenden Ansprüche, bei der das Stützteil/die Stützteile (8, 9, 15) größere Festigkeit hat/haben als die umgebende Basis-Kissenstruktur (14).

10. Vorrichtung (10, 14, 60) nach Anspruch 9, bei der eine Testdifferenz der Festigkeit zwischen 11b und 101b (0,45kg und 4,5kg) zwischen den Stützteilen (8,9,15) der Basis-Kissenstruktur (14) besteht

11. Vorrichtung (10, 14, 60) nach Anspruch 10, bei der eine Testdifferenz zwischen den Stützteilen (8, 9, 15) der Basis-Kissenstruktur (14) von 51b (2,27kg) besteht.

12. Vorrichtung (10, 14, 60) nach einem der vorangehenden Ansprüche, bei der die Basis-Kissenstruktur (14) ein einzelnes Schaumelement ist, in welches das Stützteil/die Stützteile (8, 9, 15) eingesetzt ist/sind.

13. Vorrichtung (10, 14, 60) nach einem der Ansprüche 2 bis 11, bei der die Basis-Kissenstruktur (14) einen zweiteiligen Aufbau hat und das Stützteil/die Stützteile (8, 9, 15) zwischen den beiden Teilen positioniert ist/sind.

14. Vorrichtung (10, 14, 60) nach Anspruch 13, bei der die Sitzbasisvorrichtung (14) ein Flugzeugsitz ist.

15. Vorrichtung (10, 14, 60) nach einem der vorangehenden Ansprüche, bei der das oder jedes Stützteil (8, 9, 15) keilförmig geformt ist.

16. Vorrichtung (10, 14, 60) nach Anspruch 15, bei der jedes Stützteil (8, 9, 15) zwischen 2 und 3,8 cm dick an dem Ende an der Rückseite der Basis-Kissenstruktur (14) ist und sich zum entgegengesetzten Ende hin verjüngt.

17. Vorrichtung (10, 14, 60) nach einem der vorangehenden Ansprüche, bei der die Oberfläche der Basis-Kissenstruktur (14) im wesentlichen horizontal ist.

18. Vorrichtung (10, 14, 60) nach einem der Ansprüche 2 bis 16, bei der die Oberfläche der Basis-Kissenstruktur (14) unter einem Winkel zwischen 0 bis 20° bezüglich der Horizontalen verläuft.

19. Vorrichtung (10, 14, 60) nach einem der vorangehenden Ansprüche, bei der die Stützteile (8, 9, 15) aus Silikon bestehen.

20. Sitzbasisvorrichtung (10, 14, 60) nach Anspruch 1, umfassend eine Sitzwanne (60) und ein Sitzkissen, wobei die Sitzwanne eine Ausnehmung (61, 62) entsprechend dem zweiten Bereich und das Sitzkissen einen Vorsprung (64, 65) umfasst, der in die Ausnehmung (61, 62) passt, wobei im Gebrauch die Ausnehmung (61, 62) und der Vorsprung (64, 65) miteinander so zusammenwirken, dass sie den zweiten Bereich der zweiten Festigkeit bilden.

21. Sitzbasisvorrichtung (10, 14, 60) nach Anspruch 1, bei der der zweite Bereich mehrere Ausdehnungen variabler Härte aufweist, die ein chevronartiges Muster bilden und von einer ersten Kante ausgehen, wodurch die Ischias-Protuberanzen eines Nutzers längs einer Zone über oder nächst der Ebene eines Sitzes ausgerichtet ist, die den ersten Bereich hat und in der der zweite Bereich vorgesehen ist.

22. Sitzbasisvorrichtung nach Anspruch 21, wobei die Ausdehnungen variabler Härte aus mehr als einer Materialart bestehen.

## Revendications

1. Dispositif de base de siège (10, 14, 60) comportant une surface de dessus, la surface de dessus ayant une première région d'une première fermeté et une deuxième région d'une deuxième fermeté, plus ferme que ladite première fermeté, moyennant quoi ladite deuxième région de la surface de dessus a une forme en chevron avec des dimensions qui sont suffisamment étroites pour supporter la tubérosité ischiatique d'un utilisateur tout en évitant le support du tissu musculaire environnant et ladite première région de la surface de dessus est définie pour supporter le tissu musculaire environnant, de sorte que, en utilisation, le pelvis d'un utilisateur est amené à s'incliner vers une position ouverte.

2. Dispositif de base de siège (10, 14, 60) selon la revendication 1, comprenant une structure de coussin de base comportant un bord arrière et un bord avant et ladite surface de dessus, la surface de dessus étant réalisée par une première couche de matériau compressible, au moins un élément de support (8, 9, 15) disposé dans la structure de coussin de base à l'arrière de la structure au-dessous de la surface de dessus et plus rigide que la première couche compressible et réalisé en un matériau avec une surface supérieure qui s'incline vers le bas, de l'arrière vers l'avant, moyennant quoi ladite deuxième région d'une deuxième fermeté est réalisée.

3. Dispositif de base de siège (10, 14, 60) selon la revendication 1, comprenant une structure de coussin de base (14) présentant un bord arrière et un bord avant et ladite surface de dessus, la surface de dessus étant réalisée par une première couche de matériau compressible, au moins un élément de support (8, 9, 15) disposé dans la structure de coussin de base (14) à l'arrière de la structure au-dessous de la surface de dessus et plus rigide que la première couche compressible et réalisé en un matériau avec une surface supérieure qui est dimensionnée pour supporter les tubérosités ischiatiques et ne pas s'étendre plus loin que nécessaire pour réaliser le support des tubérosités ischiatiques de sorte que les muscles fessiers ne sont pas supportés par la surface supérieure, moyennant quoi ladite deuxième région d'une deuxième fermeté est réalisée.

4. Dispositif selon la revendication 2 ou 3, dans lequel ledit au moins un élément de support consiste en deux éléments de support (8, 9, 15), dans lequel
chaque élément de support (8, 9, 15) est agencé pour supporter une tubérosité ischiatique respective.

5. Dispositif selon la revendication 4, dans lequel chaque élément de support a une largeur entre 6 et 9 cm et une longueur entre 19 et 22 cm.

6. Dispositif (10, 14, 60) selon la revendication 5, dans lequel chaque élément de support a une largeur de 7,6 cm et une longueur de 20,3 cm.

7. Dispositif (10, 14, 60) selon l'une quelconque des revendications 4 à 6, dans lequel les éléments de support (8, 9, 15) se touchent à l'arrière de la structure de coussin de base (14) et sont espacés de 6 cm à 9 cm vers l'avant de la structure de coussin de base.

8. Dispositif (10, 14, 60) selon la revendication 7, dans lequel les éléments de support (8, 9, 15) sont espacés de 7,6 cm vers l'avant de la structure de coussin de base (14).

9. Dispositif (10, 14, 60) selon l'une quelconque des revendications précédentes, dans lequel le ou les éléments de support (8, 9, 15) a/ont une plus grande fermeté que la structure de coussin de base (14) environnante.

10. Dispositif (10, 14, 60) selon la revendication 9, dans lequel il y a une différence de fermeté entre le test 11b et le test 101b (0,45 et 4,5 kg) entre le ou les éléments de support (8, 9, 15) et la structure de coussin de base (14).

11. Dispositif (10, 14, 60) selon la revendication 10, dans lequel il y a une différence de fermeté de test 51b (2,27 kg) entre le ou les éléments de support (8, 9, 15) et la structure de coussin de base (14).

12. Dispositif (10, 14, 60) selon l'une quelconque des revendications précédentes, dans lequel la structure de coussin de base (14) consiste en un élément en mousse unique dans lequel le ou les éléments de support (8, 9, 15) est/sont insérés.

13. Dispositif (10, 14, 60) selon l'une quelconque des revendications 2 à 11, dans lequel la structure de coussin de base (14) est une structure à deux éléments et le ou les éléments de support (8, 9, 15) est/sont positionnés entre les deux éléments.

14. Dispositif (10, 14, 60) selon la revendication 13, dans lequel le dispositif de base de siège (14) est un siège d'avion.

15. Dispositif (10, 14, 60) selon l'une quelconque des revendications précédentes, dans lequel le ou chaque élément de support (8, 9, 15) est en forme de coin.

16. Dispositif (10, 14, 60) selon la revendication 15, dans lequel chaque élément de support (8, 9, 15) a une épaisseur entre 2 et 3,8 cm à l'extrémité dirigée vers l'arrière du coussin de base (14) et diminue vers l'extrémité opposée.

17. Dispositif (10, 14, 60) selon l'une quelconque des revendications précédentes, dans lequel la surface de la structure de coussin de base (14) est sensiblement horizontale.

18. Dispositif (10, 14, 60) selon l'une quelconque des revendications 2 à 16, dans lequel la surface de la structure de coussin de base (14) forme un angle entre 0 et 20 degrés avec l'horizontale.

19. Dispositif (10, 14, 60) selon l'une quelconque des revendications précédentes, dans lequel les éléments de support (8, 9, 15) sont réalisés en silicone.

20. Dispositif de base de siège (10, 14, 60) selon la revendication 1, comprenant en outre un fond (60) et un coussin de siège, dans lequel le fond comprend un évidement (61, 62) correspondant à ladite deuxième région et le coussin de siège comprend une protubérance (64, 65) agencée pour s'insérer dans ledit évidement (61, 62), moyennant quoi, en utilisation, ledit évidement (61, 62) et ladite protubérance (64, 65) interagissent de manière à former ladite deuxième région d'une deuxième fermeté.

21. Dispositif de base de siège (10, 14, 60) selon la revendication 1, dans lequel la deuxième région comprend une pluralité d'extensions de dureté variable définissant un motif en chevrons s'étendant depuis un premier bord, moyennant quoi les tubérosités ischiatiques d'un utilisateur sont alignées le long d'une zone disposée sur le ou à proximité du plan d'un siège réalisant la première région et dans lequel la deuxième région est disposée.

22. Dispositif de base de siège selon la revendication 21, dans lequel les extensions de dureté variable sont composées de plus d'un type de matériau.
